# EUROPÄISCHE PATENTSCHRIFT

(11) **EP 3 807 709 B1**
(45) Veröffentlichungstag und Bekanntmachung des Hinweises auf die Patenterteilung: **05.03.2025**
(21) Anmeldenummer: 19731934.6
(22) Anmeldetag: 13.06.2019
(51) Int. Cl.: G02B 27/01, F21V 8/00

(54) **OPTISCHES ELEMENT FÜR EIN HEAD-UP-DISPLAY**
OPTICAL ELEMENT FOR A HEAD-UP-DISPLAY
ÉLÉMENT OPTIQUE POUR AFFICHAGE TÊTE HAUTE

(30) Priorität: 15.06.2018 DE 102018209637
(43) Veröffentlichungstag der Anmeldung: 21.04.2021
(73) Patentinhaber: Continental Automotive Technologies GmbH, 30175 Hannover (DE)
(72) Erfinder: SCHÖPPER, Markus, 65824 Schwalbach a. Ts. (DE); WILLE, Felicitas, 65824 Schwalbach a. Ts. (DE)
(74) Vertreter: Continental Corporation
(86) Internationale Anmeldenummer: PCT/EP2019/065624
(87) Internationale Veröffentlichungsnummer: WO 2019/238897

(56) Entgegenhaltungen:
- US-A1- 2007 211 449
- US-A1- 2018 149 791

## Beschreibung

Die vorliegende Erfindung betrifft ein optisches Element, insbesondere für ein Head-Up-Display, ein Head-Up-Display aufweisend ein solches optisches Element und ein Herstellungsverfahren.

Aus der US 2016/0124223 A1 ist ein Head-Up-Display mit einem Lichtwellenleiter als optisches Element bekannt. Nachteilig daran ist anzusehen, daß dessen Herstellung aufwendig ist, wenn exakte Abstände innerhalb des optischen Elements erzielt werden sollen. Je exakter diese Abstände eingehalten werden, desto besser ist die mit dem optischen Element erzielbare optische Darstellung, im Fall eines Head-Up-Displays die Qualität des erzeugten virtuellen Bildes.

Aus der DE 34 00 429 A1 ist ein optisches Element bekannt, bei dem ein Flüssigkristall zwischen zwei zueinander parallelen Trägerplatten angeordnet ist. Um die Trägerplatten exakt parallel zueinander auszurichten ist dort vorgesehen, kugelförmige Distanzelemente verteilt zwischen den Trägerplatten anzuordnen. Dies ist für Flüssigkristallanzeigen mit relativ grober Auflösung eine gute Lösung. Bei höheren Auflösungen, insbesondere bei der Verwendung in einem Lichtwellenleiter für ein Head-Up-Display, können die Distanzelemente aufgrund ihrer vom umgebenden Material abweichenden optischen Eigenschaften zu Bildfehlern führen, die vom Benutzer wahrgenommen werden können.

Aus US 2018/149791 A1 und US 2007/211449 A1 ist ein optisches Element bekannt aufweisend ein Substrat, eine Deckschicht, eine zwischen diesen befindliche optisch aktive Schicht, und Distanzelemente, die in der optisch aktiven Schicht verteilt angeordnet sind und aus einem ausgehärteten Material bestehen.

Bei einem erfindungsgemäßen optischen Element bestehen die Distanzelemente und die optisch aktive Schicht aus demselben Material.

Vorteilhafterweise weisen die Distanzelemente in Abhängigkeit von ihrer Position unterschiedliche Dicke auf.

Ein erfindungsgemäßes Head-Up-Display weist ein erfindungsgemäßes optisches Element als Lichtwellenleiter auf.

Ein Verfahren zum Herstellen eines Lichtwellenleiters für ein Head-Up-Display gemäß der Erfindung weist folgendes auf: Ein Positionieren eines Substrats und einer Deckschicht in definiertem Abstand zueinander. Ein Befüllen des dadurch definierten Zwischenraums mit einem aushärtbaren flüssigen Material. Ein Erzeugen von Distanzelementen mittels punktuellem Aushärten des aushärtbaren Materials. Ein Entfernen von zur Positionierung genutzten Halterungen. Das Herstellen einer optisch aktiven Schicht im verbleibenden Teil des Zwischenraums.

Bei einer bevorzugten Variante weist das Herstellen der optisch aktiven Schicht ein optisches Aktivieren des noch nicht ausgehärteten, im Zwischenraum befindlichen Materials auf.

Gemäß einer bevorzugten Variante erfolgt ein Entfernen des nach dem punktuellen Aushärten verbleibenden nicht ausgehärteten Materials, ein Befüllen des dadurch freigewordenen Teils des Zwischenraums mit einem optisch aktivierbaren Material, und ein Herstellen der optisch aktiven Schicht aus dem optisch aktivierbaren Material.

Weitere Varianten und deren Vorteile sind auch der nachfolgenden Beschreibung von Ausführungsbeispielen entnehmbar.

### Figurenübersicht:

- Fig.1: Head-Up-Display gemäß Stand der Technik
- Fig.2: schematischer Strahlengang
- Fig.3: schematischer Strahlengang mit Diffusor
- Fig.4: Strahlengang mit gerichtetem Diffusor
- Fig.5: Strahlengang mit mehreren Bildgebern
- Fig.6: Strahlengang mit Bild im Unendlichen
- Fig.7: Strahlengang mit virtueller Verdopplung
- Fig.8: Strahlengang mit Lichtwellenleiter
- Fig.9: Strahlengang mit Lichtwellenleiter
- Fig.10: Head-Up-Display mit Lichtwellenleiter
- Fig.11: Lichtwellenleiter mit zweidimensionaler Vergrößerung
- Fig.12: Head-Up-Display mit Lichtwellenleiter
- Fig.13: Lichtwellenleiter im Längsschnitt
- Fig.14: erfindungsgemäßes optisches Element
- Fig.15: Ablaufdiagramm eines erfindungsgemäßen Verfahrens
- Fig.16: Ablaufdiagramm eines weiteren erfindungsgemäßen Verfahrens

### Figurenbeschreibung

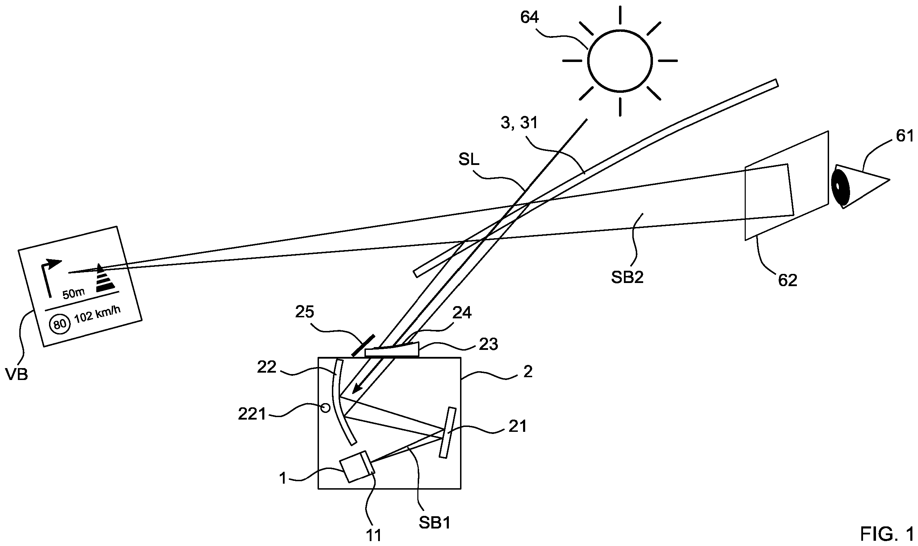

Fig.1 zeigt eine Prinzipskizze eines Head-Up-Displays gemäß Stand der Technik. Es weist einen Bildgenerator 1 auf, eine Optikeinheit 2 und eine Spiegeleinheit 3. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3, die hier als Windschutzscheibe 31 eines Fahrzeugs dargestellt ist, reflektiert. Von dort gelangt das Strahlenbündel SB2 Richtung Auge 61 eines Betrachters. Dieser sieht ein virtuelles Bild VB, welches sich außerhalb des Fahrzeugs oberhalb der Motorhaube oder sogar vor dem Fahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder garnicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodaß das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, daß der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24, die einfallendes Sonnenlicht SL daran hindern soll, über die Spiegel 21,22 auf das Anzeigeelement 11 zu gelangen. Dieses kann durch dabei auftretende Wärmeentwicklung vorübergehend oder auch dauerhaft geschädigt werden. Um dies zu verhindern wird beispielsweise ein Infrarotanteil des Sonnenlichts SL mittels der optischen Folie 24 ausgefiltert. Ein Blendschutz 25 dient dazu, von vorne einfallendes Licht abzuschatten, sodaß es nicht von der Abdeckung 23 Richtung Windschutzscheibe 31 reflektiert wird, was eine Blendung des Betrachters hervorrufen würde. Außer dem Sonnenlicht SL kann auch das Licht einer anderen Störlichtquelle 64 auf das Anzeigeelement 11 gelangen.

Gleiche Bezugszeichen werden auch in den folgenden Figuren für gleiche oder gleichwirkende Elemente verwendet, und nicht notwendigerweise zu jeder Figur erneut beschrieben.

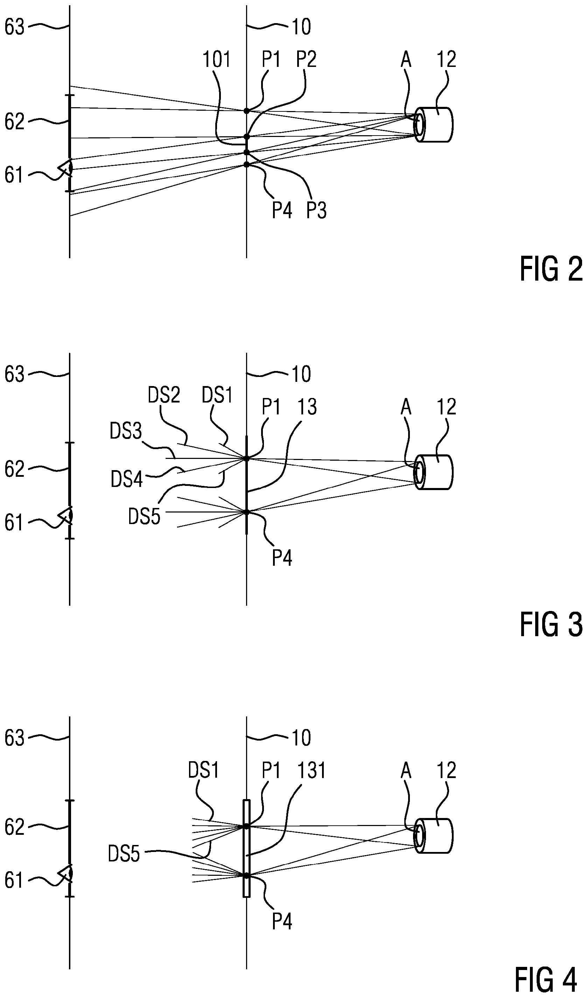

Die Fig. 2-4 zeigen einen vereinfachten schematischen Strahlengang in einem Head-Up-Display. Dabei sind die unterschiedlichen Spiegelungen der Übersichtlichkeit halber weggelassen. Man sieht links das Auge 61, in der Mitte die Bildebene 10, die sowohl dem Anzeigeelement 11 als auch dem virtuellen Bild VB entspricht, und rechts die Apertur A eines Bildgebers 12, der beispielsweise ein Spacial Light Modulator, auch SLM genannt, ist. Mit einem SLM wird Licht räumlich moduliert. Dies kann auf unterschiedliche Arten erfolgen. Eine spezielle Art SLM ist ein DMD-Projektor, wobei DMD für "Digital Micromirror Device" steht. Dies ist ein Gerät, bei dem entweder ein einzelner in X- und Y-Richtung beweglicher Mikrospiegel einen Laserstrahl über eine Bildfläche scannt, oder bei dem die Bildfläche durch eine Vielzahl flächig nebeneinander angeordneter Mikrospiegel gebildet ist, die von einer Lichtquelle beleuchtet werden. Die Eyebox 62 ist in der Betrachtungsebene 63 mittels einer verstärkten Linie und Begrenzung nach oben und unten kenntlich gemacht.

Fig.2 zeigt Punkte P1 bis P4 in der Bildebene 10. Man erkennt, daß der Punkt P1 aufgrund seiner Lage in der Bildebene 10 und der Größe der Apertur A nur aus Teilen der Eyebox 62 sichtbar ist. Der Punkt P4 ist nur außerhalb der Eyebox 62 sichtbar. Nur die Punkte P2 und P3 sind in der Eyebox 62 sichbar, von ihnen ausgehende Strahlen fallen auch ins Auge 61. Somit kann nur ein kleiner Bereich 101 der Bildebene 10 vom Auge 61 in dessen dargestellte Position erfaßt werden.

Fig.3 zeigt die gleiche Anordnung wie Fig.2, allerdings mit einem in der Bildebene 10 angeordneten Diffusor 13. Dieser sorgt dafür, daß vom Bildgeber 12 her kommendes Licht diffus gestreut wird. Dies ist in den Punkten P1 und P4 mittels diffus gestreuter Strahlen DS1 - DS5 angedeutet, deren Richtung angibt, in welche Richtung diffus gestreuter wird, und deren Länge die Intensität in die entsprechende Richtung angibt. Man erkennt, daß die größte Intensität im Zentrum des entsprechenden in Fig.2 gezeigten Strahlenbündels verläuft, hier durch den diffus gestreuten Strahl DS3 verdeutlicht. Je größer der Winkel der anderen Strahlen DS1, DS2, DS4, DS5 zu dem Strahl DS3 ist, desto geringer ist ihre Intensität. Man erkennt, daß vom Punkt P1 der Strahl DS5 ins Auge 61 gelang. In die Eyebox 62 fallen weiterhin die diffus gestreuten Strahlen DS3 und DS4, während die Strahlen DS1 und DS2 außerhalb liegen, und somit verlorengehen. Ähnliches gilt für Punkt P4.

Fig.4 zeigt die gleiche Anordnung wie Fig.3, allerdings mit einem Diffusor 131, der eine spezielle Diffusionscharakteristik aufweist. Man erkennt, daß alle vom Punkt P1 ausgehenden diffus gestreuten Strahlen DS1 bis DS5 in etwa gleiche Intensität aufweisen, und ihre Winkelverteilung so ist, daß sie alle in die Eyebox 62 gelangen. Ein Lichtverlust tritt somit an dieser Stelle nicht auf.

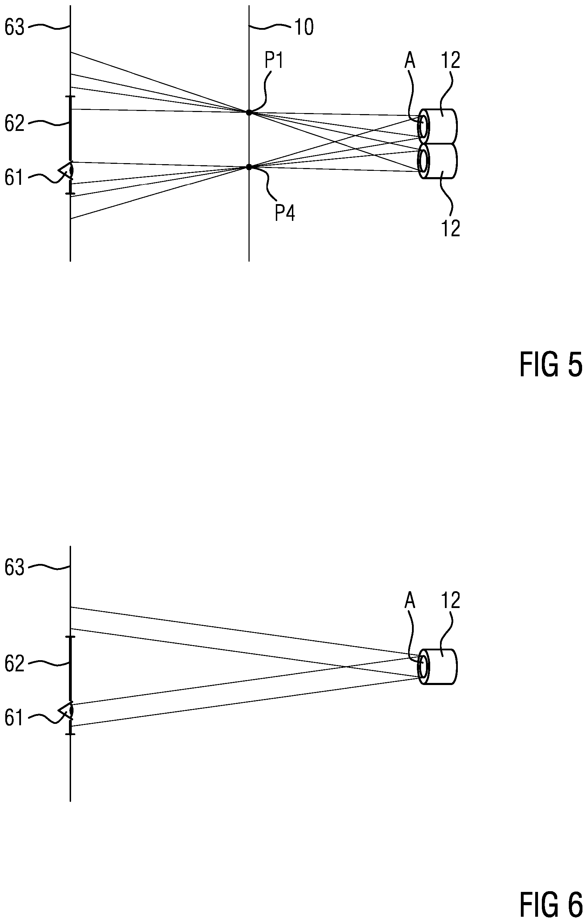

Fig.5 zeigt eine ähnliche Anordnung wie die vorhergehenden Figuren, hier allerdings mit mehreren Bildgebern 12. Die Bildgeber 12 sind so aufeinander abgestimmt, daß in den Punkten P1 und P4 Lichtstrahlen in einem größeren Winkelbereich abgestrahlt werden, wodurch auch der Punkt P4 aus der Eyebox 62 heraus sichtbar ist. Durch eine Vergrößerung der Anzahl der Bildgeber 12 wird ein ähnlicher Effekt wie mittels eines Diffusors 13 bezüglich der Sichtbarkeit der Punkte P1 bis P4 in der gesamten Eyebox 62 erzielt.

Fig.6 zeigt eine ähnliche Anordnung wie die vorhergehenden Figuren, hier fokussiert der Bildgeber 12 aber nicht auf eine Bildebene, sondern kollimiert ins unendliche. Die in der Betrachtungsebene 63 zu einem Punkt ankommenden Strahlen verlaufen jeweils parallel zueinander. Dies ermöglicht es, anstatt mehrere aufeinander abgestimmte Bildgeber 12 anzuordnen, wie in Fig.5 gezeigt, den einen Bildgeber 12 virtuell zu verdoppeln. Dies ist in den folgenden Figuren gezeigt.

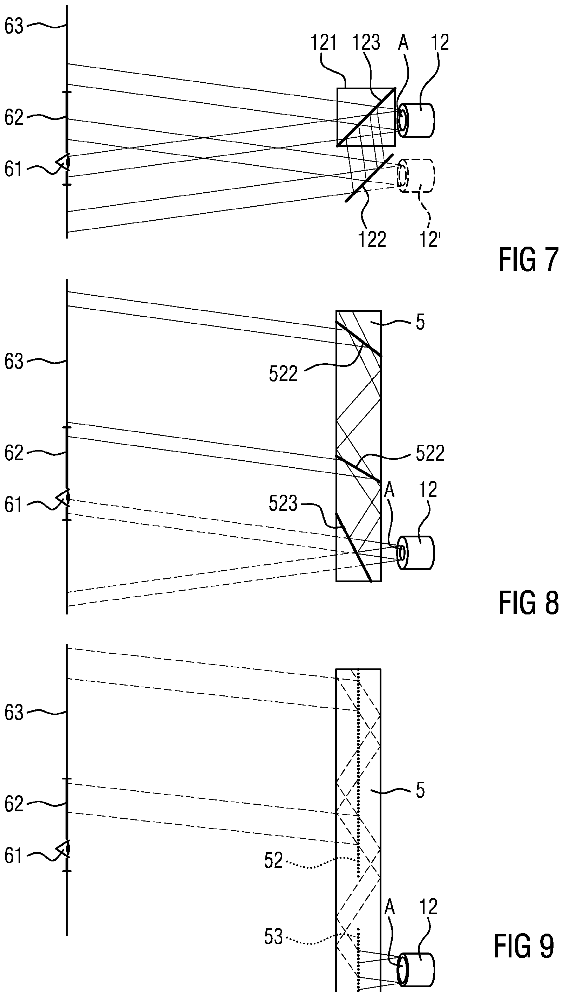

Fig.7 zeigt eine ähnliche Anordnung wie Fig.6, hier allerdings mit virtueller Verdopplung des Bildgebers 12. Dazu ist ein Strahlteiler im Strahlengang des Bildgebers 12 angeordnet, der einen Teil der Strahlung auf einen Spiegel 122 reflektiert. Die Spiegelebene 123 des Strahlteilers 121 ist parallel zum Spiegel 122 ausgerichtet. Die Anzahl der vom Bildgeber 12 ausgehenden parallelen Strahlenbündel, von denen hier zwei gezeigt sind, wird verdoppelt, ihre Intensität jeweils halbiert. Somit treffen beide dargestellten Strahlenbündel in die Eyebox 62. Der virtuelle Bildgeber 12'ist gestrichelt angedeutet. Durch geeignete Anordnung von weiteren Strahlteilern und geeigneter Anpassung von deren Größe läßt sich erreichen, daß Strahlenbündel zu einem großen Winkelbereich von jedem Punkt der Eyebox 62 aus betrachtet werden können, wenn sich das Auge 61 dort befindet.

Fig.8 zeigt eine ähnliche Anordnung wie Fig.7. Allerdings sind hier der Strahlteiler 121 und der Spiegel 122 durch einen Lichtwellenleiter 5 ersetzt. Der Lichtwellenleiter 5 weist eine Spiegelebene 523 auf, mit der vom Bildgeber 12 kommendes Licht in den Lichtwellenleiter 5 eingekoppelt wird. Die Verlängerung der ursprünglichen Strahlrichtung ist gestrichelt angedeutet. Das in dem Lichtwellenleiter 5 eingekoppelte Licht wird an dessen Grenzflächen totalreflektiert und wird somit innerhalb des Lichtwellenleiters 5 geleitet. Der Lichtwellenleiter 5 weist weiterhin Spiegelebenen 522 auf, die teildurchlässig sind und jeweils einen Teil des auf sie auftreffenden Lichts aus dem Lichtwellenleiter 5 auskoppeln. Dies ist der Übersichtlichkeit halber mit dem parallelen Strahlenbündel zu nur einem Winkel gezeigt. Man erkennt das Prinzip der Vervielfachung der parallelen Strahlenbündel. Durch geeignete Anordnung läßt sich eine hinreichend gleichmäßige Ausleuchtung der Eyebox 62 erzielen. Das Einkoppeln und das Auskoppeln können anstatt mittels Spiegelebenen 522,523 auch mittels an der Oberfläche des Lichtwellenleiters 5 angeordneter Beugungsgitter (hier nicht dargestellt) oder auf andere, dem Fachmann geläufige Art und Weise, erfolgen.

Fig.9 zeigt eine ähnliche Anordnung wie Fig.8, allerdings weist hier der Lichtwellenleiter 5 ein Einkoppelhologramm 53 und ein Auskoppelhologramm 52 auf, die als Volumenhologramme in der Mitte des Lichtwellenleiters 5 angeordnet sind. Auch hier wird nur das Prinzip angedeutet. Es versteht sich, daß durch geeignete Wahl der Hologramme erreicht werden kann, daß die gesamte Eyebox 62 gleichmäßig mit parallelen Strahlenbündeln zu allen gewünschten Winkeln ausgeleuchtet wird.

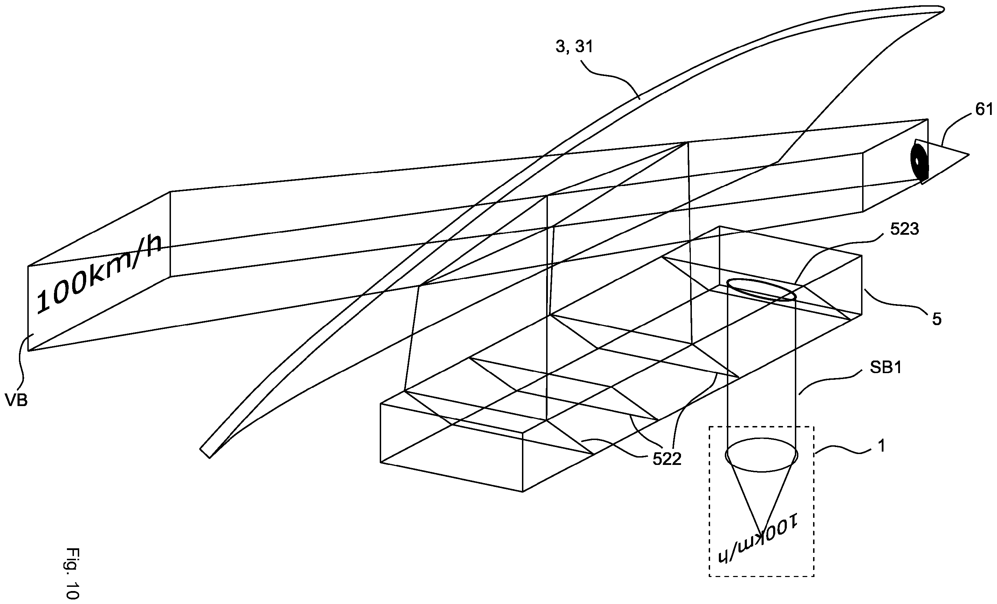

Fig.10 zeigt ein Head-Up-Display ähnlich zu Fig.1, hier allerdings in räumlicher Darstellung und mit einem Lichtwellenleiter 5. Man erkennt den schematisch angedeuteten Bildgeber 12, der ein paralleles Strahlenbündel SB1 erzeugt, welches mittels der Spiegelebene 523 in den Lichtwellenleiter 5 eingekoppelt wird. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert, welches ein virtuelles Bild VB über der Motorhaube bzw. in noch weiterer Entfernung vor dem Fahrzeug sieht.

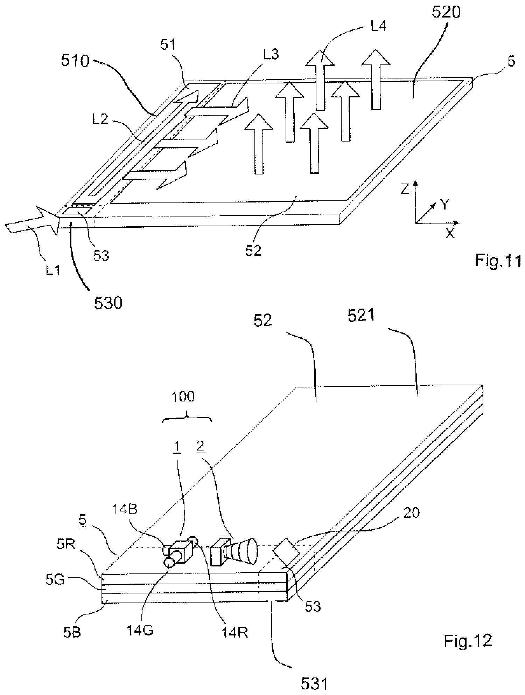

Fig.11 zeigt in schematischer räumlicher Darstellung einen Lichtwellenleiter 5 mit zweidimensionaler Vergrößerung. Im unteren linken Bereich erkennt man ein Einkoppelhologramm 53 mittels dessen von einem nicht dargestellten Bildgeber 12 kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X Richtung, sodaß das ursprüngliche einfallende Lichtbündel L1 als in zwei Dimensionen vergrößertes Lichtbündel L4 den Lichtwellenleiter 5 verläßt. Der Lichtwellenleiter 5 weist einen in y-Richtung aufweitenden ersten Lichtwellenleiter 510 auf, der das Falthologramm 51 aufweist, einen in x-Richtung aufweitenden zweiten Lichtwellenleiter 520, der das Auskoppelhologramm 52 aufweist, und einen dritten Lichtwellenleiter 530, der das Einkoppelhologramm 53 aufweist.

Fig.12 zeigt in räumlicher Darstellung ein Head-Up-Display mit drei Lichtwellenleitern 5R, 5G, 5B, die übereinanderliegend angeordnet sind, und für je eine Elementarfarbe Rot, Grün und Blau stehen. Sie bilden gemeinsam den Lichtwellenleiter 5. Die in den Lichtwellenleitern 5 vorhandenen Hologramme 51,52, 53 sind wellenlängenabhängig, sodaß jeweils ein Lichtwellenleiter 5R, 5G, 5B für eine der Elementarfarben verwendet wird. Oberhalb des Lichtwellenleiters 5 ist ein Bildgenerator 1 und eine Optikeinheit 2 dargestellt. Beide zusammen werden oft auch als bildgebende Einheit oder PGU 100 bezeichnet. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, daß die gesamte dargestellte Einheit eine im Vergleich zu ihrer lichtabstrahlenden Fläche geringe Gesamtbauhöhe aufweist.

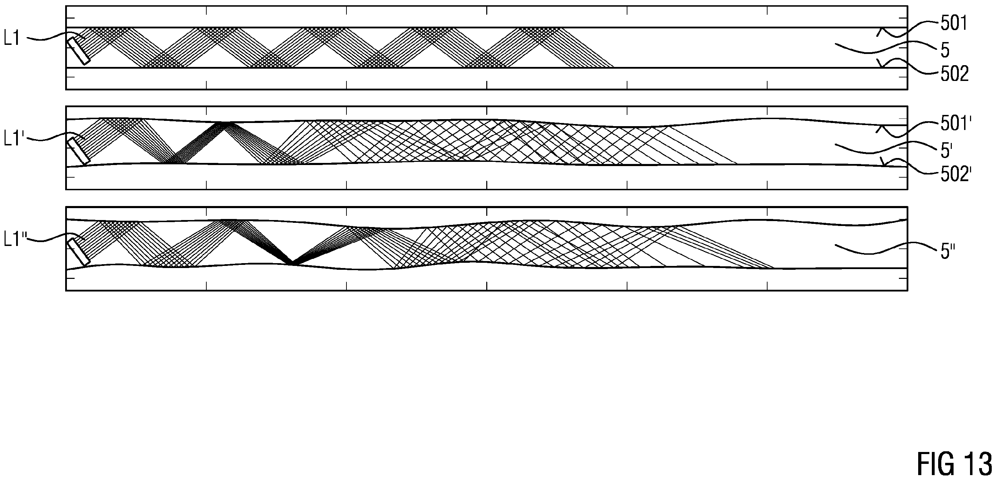

Fig 13 zeigt drei Lichtwellenleiter 5 im Längsschnitt. Der obere Lichtwellenleiter 5 weist eine ideal ebene obere Begrenzungsflächen 501 auf und eine ideal ebene untere Begrenzungsfläche 502, welche beide parallel zueinander angeordnet sind. Man erkennt, daß ein paralleles Lichtbündel L1, welches sich von links nach rechts im Lichtwellenleiter 5 ausbreitet, aufgrund der Parallelität und Ebenheit der oberen und unteren Begrenzungsflächen 501,502 im Querschnitt unverändert und parallel verbleibt. Der mittlere Lichtwellenleiter 5' weist obere und untere Begrenzungsflächen 501',502' auf, die nicht vollkommen eben und auch nicht zumindest abschnittsweise parallel zueinander sind. Der Lichtwellenleiter 5' hat somit eine in Lichtausbreitungsrichtung variierende Dicke. Man erkennt, daß das Lichtbündel L1' schon nach wenigen Reflexionen nicht mehr parallel ist und auch keinen homogenen Querschnitt aufweist. Der untere Lichtwellenleiter 5" hat obere und untere Begrenzungsflächen 501",502", die noch stärker von der Idealform abweichen als die oberen beiden. Das Lichtbündel L1" weicht somit ebenfalls noch stärker von der Idealform ab.

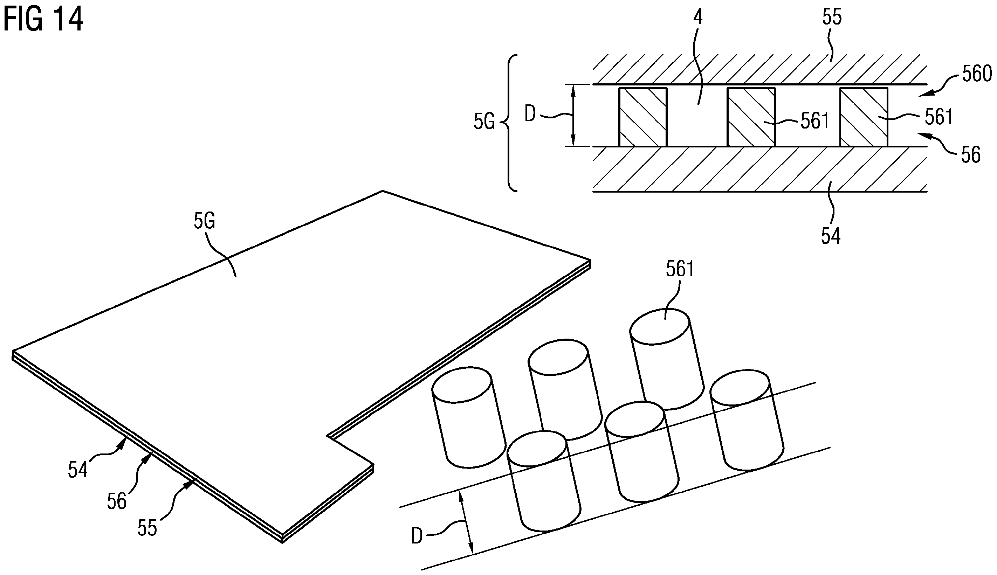

Fig. 14 zeigt im linken Teil einen Lichtwellenleiter 5G, an dessen Beispiel eine erfindungsgemäße Lösung erläutert wird. Der Lichtwellenleiter 5G besteht aus einem Substrat 54, hier einem Glassubstrat, einer dünner holographischen Schicht, der Hologrammschicht 56, und einem weiteren Glassubstrat als Deckschicht 55. Dies ist rechts oben in einer Schnittdarstellung vergrößert dargestellt.

Während der Herstellung des Lichtwellenleiters 5G befindet sich zunächst zwischen der Deckschicht 55 und dem Substrat 54, die im Abstand D zueinander fixiert werden, ein Zwischenraum 560. In diesen wird während der Herstellung ein aushärtbares flüssiges Material eingefüllt. Dieses wird partiell ausgehärtet, vorzugsweise durch Belichtung, sodaß lokal abgegrenzte Bereiche ausgehärtet werden, die Distanzelemente 561. Damit kann mithilfe der vorgestellten Lösung ein regelmäßiges Muster von Abstandshaltern 561 realisiert werden. Ein Beispiel für ein solches Muster ist im rechten unteren Teil der Abbildung in vergrößerter räumlicher Darstellung gezeigt.

Neben der gleichmäßigen Verteilung von ausgehärteten Bereichen, die als Distanzelemente 561 wirken, ist auch eine ungleichmäßige Verteilung ermöglicht. So kann eine bewußt zufällig gewählte Verteilung sich auch positiv auf die Eigenschaften des Bauteils auswirken. Es ist beispielsweise vorgesehen, daß gezielt Bereiche ausgehärtet werden, die auch im fertigen optischen Element keine Funktion, insbesondere keine besondere optische Funktion übernehmen, also beispielsweise keines der Hologramme 51,52,53 enthalten. Die in diesen Bereichen angeordneten Distanzelemente 561 beeinflussen somit nicht die anderen Bereiche, die eine optische Funktion ausüben.

Nicht unter die Erfindung fällt, wenn die Distanzelemente 561 aus anderen Materialien bestehen, wobei sich diese als Schicht aufbringen lassen und der Brechungsindexunterschied zwischen dem Material der Distanzelemente 561 und dem Material der Hologrammschicht 56 vernachlässigbar ist. Bei diesem Ansatz wird das Material, das nicht ausgehärtet wird, restlos entfernt und das weitere Vorgehen entspricht dem Fertigungsprozeß bei Verwendung von Spacerbeads. Es bleibt jedoch die gezielte Positionierung der Abstandshalter im Lichtwellenleiter 5G.

In den Zwischenraum 560, der von den Distanzelementen 561 einen exakten Abstand D aufweist, wird aushärtbares flüssiges Material eingefüllt. Dieses wird zum Schreiben eines Hologramms 51, 52, 53 belichtet und gegebenenfalls in einem weiteren oder gleichzeitig erfolgenden Schritt ausgehärtet.

Eine alternative Variante sieht vor, zunächst das Substrat 54 mit einer Schicht aushärtbaren optisch aktiven Materials zu fluten. Dabei wird die gewünschte Dicke D des Zwischenraums 560 eingestellt. Die Dicke D ist entweder über die gesamte Fläche konstant, oder variiert räumlich. Dies läßt sich durch leichtes Schrägstellen des Substrats 54 erreichen. Anschließend werden die Distanzelemente 561 durch Belichten und/oder Aushärten hergestellt. Dann wird die Deckschicht 55 aufgebracht. Dies erfolgt entweder bei Vorhandensein des noch verbliebenen flüssigen Materials, oder nach dessen Entfernen. Anschließend wird dieses wieder eingebracht, um das Hologramm in dieses einzuschreiben und zu fixieren.

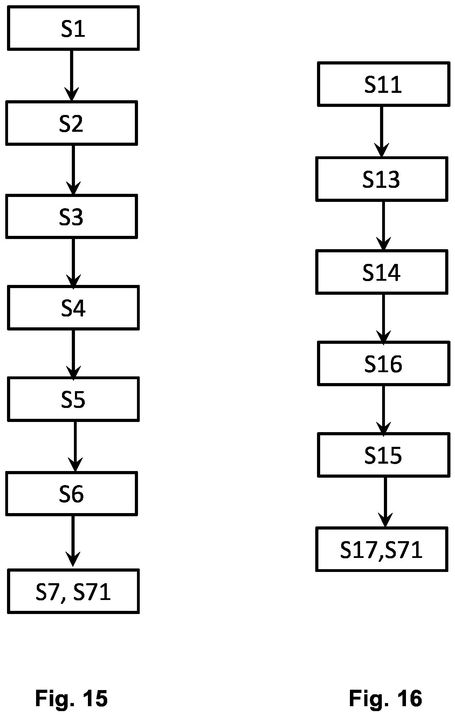

Fig. 15 zeigt ein Ablaufdiagramm zu einem ersten Beispiel eines erfindungsgemäßen Verfahrens zum Herstellen eines Lichtwellenleiters 5 für ein Head-Up-Display. Es weist auf: Positionieren S1 eines Substrats 54 und einer Deckschicht 55 in definiertem Abstand D zueinander. Befüllen S2 des dadurch definierten Zwischenraums 560 mit einem aushärtbaren flüssigen Material. Erzeugen S3 von Distanzelementen 561 mittels punktuellen Aushärtens des aushärtbaren Materials. Entfernen S5 von zur Positionierung genutzten Halterungen. Herstellen S7 einer optisch aktiven Schicht im verbleibenden Teil des Zwischenraums. Dabei weist das Herstellen S7 der optisch aktiven Schicht ein optisches Aktivieren S71 des noch nicht ausgehärteten, im Zwischenraum 560 befindlichen Materials auf. Zusätzlich vorteilhafte Schritte sind: Entfernen S4 des nach dem punktuellen Aushärten verbleibenden nicht ausgehärteten Materials. Befüllen S6 des dadurch freigewordenen Teils des Zwischenraums 560 mit einem optisch aktivierbaren Material. Herstellen S7 der optisch aktiven Schicht aus dem optisch aktivierbaren Material.

Fig. 16 zeigt ein Ablaufdiagramm zu einem weiteren Beispiel eines erfindungsgemäßen Verfahrens zum Herstellen eines Lichtwellenleiters 5 für ein Head-Up-Display. Dieses Beispiel eines erfindungsgemäßen Verfahrens eignet sich besonders bei Zielschichtdicken im einstelligen µm-Bereich, bei denen es in vielen Konstellationen nicht möglich ist, eine Schicht optisch aushärtbaren und/oder optisch aktivierbaren Materials zwischen zwei als Substrat 54 und Deckschicht 55 ausgebildeten Gläsern einzubringen. Der Abstand der Gläser zueinander ist in dieser Konstellation meist zu klein, um eine Flüssigkeit hineinzubekommen. Darüber hinaus ist es in diesem Fall schwierig bis unmöglich, nicht ausgehärtetes Material auszuwaschen und weiteres optisches Material einzufüllen.

Stattdessen wird gemäß diesem Beispiel das auszuhärtende Material in der Zielschichtdicke auf ein Substrat 54 aufgebracht S11 und partiell ausgehärtet S13. Falls das verwendete auszuhärtende Material nicht gleichzeitig auch ein optische aktivierbares Material ist, wird überschüssiges Material entfernt S14, optisch aktivierbares Material aufgebracht S16, und ein zweites Glas als Deckschicht 55 vorzugsweise durch Laminieren aufgebracht S15. Falls auszuhärtendes Material und optisch aktivierbares Material identisch sind, wird direkt nach dem partiellen Aushärten S13 ein zweites Glas als Deckschicht 55 vorzugsweise durch Laminieren aufgebracht S15. Dann erfolgt die Belichtung, die Aktivierung des optisch aktivierbaren Materials, also das Herstellen S17 einer optisch aktivierten Schicht.

Im einzelnen weist dieses Beispiel eines erfindungsgemäßen Verfahrens auf: Das Aufbringen S11 eines aushärtbaren flüssigen Materials auf ein Substrat 54 in definierter Schichtdicke (D). Diesem folgt ein Erzeugen S13 von Distanzelementen 561 mittels punktuellem Aushärten des aushärtbaren Materials. Daraufhin erfolgt ein Aufbringen S15 einer Deckschicht 55 auf das mit Distanzelementen 561 versehene Substrat 54. Das Aufbringen erfolgt vorzugsweise durch Laminieren S15. Es schließt sich an das Herstellen S17 einer optisch aktiven Schicht im von Substrat 54, Deckschicht 55 und den Distanzelementen 561 begrenzten Zwischenraum 560. Das Herstellen S17 der optisch aktiven Schicht weist ein optisches Aktivieren S71 des noch nicht ausgehärteten, im Zwischenraum 560 befindlichen Materials auf. Gemäß einer Variante erfolgt ein Entfernen S14 des nach dem punktuellen Aushärten verbleibenden nicht ausgehärteten Materials, ein Befüllen S16 des dadurch freigewordenen Volumens mit einem optisch aktivierbaren Material, und ein Herstellen S17 der optisch aktiven Schicht aus dem optisch aktivierbaren Material.

Wie beschrieben besteht ein herkömmliches Vollfarben-Head-Up-Display auf Lichtwellenleiterbasis, oft auch als "Full-Color-Waveguide-Head-up-Display" bezeichnet, aus drei übereinander liegenden monochromen Lichtwellenleitern 5R,5G,5B, jeweils einer für die Farbe Rot, Grün, und Blau. Jeder der Lichtwellenleitern 5R,5G,5B weist ein Substrat, meist aus Glas, auf, eine dünne holographische Schicht, und eine Deckschicht, meist ebenfalls ein Glassubstrat. Die monochromen Lichtwellenleitern 5R,5G,5B sind jeweils durch einen Luftspalt voneinander getrennt. An den jeweiligen Grenzflächen tritt Totale Innere Reflexion, auch als TIR bezeichnet, auf, mittels der die Lichtwellen im Lichtwellenleiter geleitet werden. Je Lichtwellenleiter 5R,5G,5B sind drei Gitterstrukturen bestehend aus Falthologramm 51, Auskoppelhologramm 52 und Einkoppelhologramm 53 vorhanden. Durch die Auskoppelung und Überlagerung der drei Farben ergibt sich ein weißes beziehungsweise vollfarbiges Bild.

Die Schichtdicke der holographischen Schicht ist ein wesentliches Merkmal eines Lichtwellenleiters 5R,5G,5B, das die Auskoppeleffizienz bestimmt bzw. deren Homogenität die Performance des Bauteils bestimmt. Die Schichtdicke muß daher im einstelligen µm-Bereich möglichst genau definiert werden.

Nach dem oben genannten Stand der Technik können zur Definition der Schichtdicke der holographischen Schicht kugelförmige Distanzelemente verwendet werden, sogenannte Spacerbeads. Dabei handelt es sich beispielsweise um kugelförmige Teilchen aus Silikatmaterial, deren Durchmesser eine geringe Standardabweichung aufweist, sodaß die Schichtdicke der holographischen Schicht möglichst präzise eingestellt werden kann.

Die zuvor genannten Spacerbeads werden beispielsweise in einer Flüssigkeit, beispielsweise einer Flüssigkeit auf alkoholischer Basis, gelöst, und auf eines der Substrate aufgesprüht. Die Flüssigkeit wird in einem Folgeschritt verdampft, sodaß vor dem Kontakt mit Material der holographischen Schicht und einem Laminationsprozeß zur Sicherstellung der Schichtdicke ausschließlich Spacerbeads auf dem Substrat zu finden sind.

Bei der Verwendung von kugelförmigen Spacerbeads, die auf ein Substrat aufgesprüht werden, kann die Gleichverteilung der Spacerbeads über das Substrat hinweg nicht sichergestellt werden. Die Spacerbeads sind zufällig auf dem Substrat verteilt. Somit kann es zu Anhäufungen oder aber zu Arealen ohne Spacerbeads kommen. Es ist außerdem nicht sichergestellt, daß die Spacerbeads nach Kontakt mit dem vor der abschließenden Belichtung flüssigem Material der holographischen Schicht noch an ihrer ursprünglichen Position zu finden sind. Es ist möglich, daß die kugelförmigen Partikel durch das flüssige Material weggeschwemmt werden. Falls es nötig ist, die Schichtdicke der holographischen Schicht über die Fläche des Lichtwellenleiters hinweg zu verändern, kann unter Verwendung von Spacerbeads kein linear ansteigendes Profil, sondern wenn, dann ein stufenförmiges Profil realisiert werden. Grund hierfür ist, daß Spacerbeads nur in definierten Größen auf dem Markt verfügbar sind und Schichtstärken, die zwischen den vorgegebenen Größen der Spacerbeads liegen, nicht realisiert werden können. Allgemein ist anzumerken, daß Spacerbeads mit einem Durchmesser kleiner als 2-3 µm sehr schwer auf dem Markt zu finden sind. Darüber hinaus darf das Auftragen der Spacerbeads im Sprühverfahren nur unter Abkapselung stattfinden, da Spacerbeads in der Luft in die Lunge eindringen können und damit gesundheitsschädlich sind. Insgesamt sind mehrere Schritte, unter anderem eine Oberflächenvorbehandlung, ein Aufsprühen, und eine Evaporation der Flüssigkeit, allein zur Aufbringung der Abstandshalter notwendig, was zu einer hohen Komplexität des Gesamtfertigungsprozesses führt.

Mit dem hier vorgestellten Vorgehen wird eine ungewollte ungleichmäßige Verteilung der Abstandshalter verhindert werden. Eine unerwünschte treppenförmige Veränderung der Schichtdicke der holographischen Schicht wird ebenfalls unterbunden. Darüber hinaus wird der komplexe Fertigungsprozeß des Lichtwellenleiters vereinfacht

Die erfindungsgemäß beschriebene Lösung verzichtet auf die Verwendung von Spacerbeads zur Definition der Stärke der holographischen Schicht. Stattdessen wird das flüssige Material der holographischen Schicht durch ein geeignetes Fertigungsverfahren vollflächig auf das Substrat 54 aufgebracht und direkt im Anschluß einem lokal begrenzten Aushärtungsprozeß unterzogen. Dabei wird das Material der holographischen Schicht beispielsweise punktförmig ausgehärtet, sodaß in der flüssigen Schicht feste Zylinder entstehen, die über eine hohe Festigkeit verfügen. Der Aushärtungsprozeß erfolgt durch Strahlung im Aushärtungswellenlängenbereich des holographischen Materials. Im Anschluß wird die Deckschicht 55 aufgebracht. Veränderungen im weiteren Fertigungsprozeß sind nicht notwendig.

Die Vorteile der vorgestellten Lösung liegen in der Vermeidung von zusätzlichen Materialien in der holographischen Schicht. Auch bei einem sehr geringen Brechungsindexunterschied zwischen Spacerbeads und Material der holographischen Schicht kann es zu unerwünschten Störungen und damit zu Einbußen der Leistungsfähigkeit der Lichtwellenleiter kommen. Bei Verwendung des Materials der holographischen Schicht liegen keine unerwünschten Brechungsindexunterschiede vor. Darüber hinaus ist mithilfe der vorgestellten Lösung eine reproduzierbare und gleichmäßige Verteilung der Distanzelemente über die Fläche des Lichtwellenleiters hinweg ermöglicht. Wird die Schichtdicke durch das Auftragsverfahren stufenlos variiert, so ist es ermöglicht, auch die Schichtdicke der holographischen Schicht flexibel anzupassen und einen linearen, oder einen andersgearteten stufenlosen Verlauf der Schichtdicke zu realisieren. Des weiteren wird der Fertigungsprozeß für den Lichtwellenleiter erheblich vereinfacht, da eine Einheit zur lokalen Belichtung mindestens eine Oberflächenvorbehandlung, einen Sprühvorgang sowie die Evaporation der Flüssigkeit ersetzt. Die vorgestellte Lösung läßt sich auch bei anderen optischen Elementen anwenden, bei denen es auf Exaktheit ähnlich geringer Schichtdicken im Bereich von unter 2 µm ankommt.

Weitere Kombinationen und Abwandlungen der erfindungsgemäß vorgeschlagenen Varianten liegen ebenfalls im Rahmen der Erfindung wie durch die Ansprüche definiert, auch wenn sie hier nicht explizit beschrieben sind.

## Patentansprüche

1. Optisches Element, aufweisend ein Substrat (54), eine Deckschicht (55), eine zwischen diesen befindliche optisch aktive Schicht (56)in die ein Hologramm eingeschrieben ist, und Distanzelemente (561), die in der optisch aktiven Schicht (56) verteilt angeordnet sind und aus einem ausgehärteten Material bestehen, **dadurch gekennzeichnet, daß** die Distanzelemente (561) und die optisch aktive Schicht (56) aus demselben Material bestehen.

2. Optisches Element nach Anspruch1, wobei die Distanzelemente (561) in Abhängigkeit von ihrer Position unterschiedliche Dicke aufweisen.

3. Optisches Element nach einem der vorhergehenden Ansprüche, wobei die Distanzelemente (561) in einem regelmäßigen Muster angeordnet sind.

4. Optisches Element nach einem der Ansprüche 1 bis 2, wobei die Distanzelemente (561) ungleichmäßig verteilt angeordnet sind.

5. Optisches Element nach einem der vorhergehenden Ansprüche, wobei sich die Distanzelemente (561) in Bereichen befinden, welche keines der Hologramme (51,52,53) enthalten.

6. Head-Up-Display aufweisend ein optisches Element gemäß einem der Ansprüche 1 bis 5 als Lichtwellenleiter.

7. Verfahren zum Herstellen eines Lichtwellenleiters (5) in Form eines optischen Elements nach Anspruch 1, für ein Head-Up-Display, mit
- Positionieren (S1) eines Substrats (54) und einer Deckschicht (55) in definiertem Abstand (D) zueinander,
- Befüllen (S2) des dadurch definierten Zwischenraums (560) mit einem aushärtbaren flüssigen Material,
- Erzeugen (S3) von Distanzelementen (561) mittels punktuellem Aushärten des aushärtbaren Materials,
- Entfernen (S5) von zur Positionierung genutzten Halterungen,
- Herstellen (S7) einer optisch aktiven Schicht, in die ein Hologramm einschreibbar ist, im verbleibenden Teil des Zwischenraums, aufweisend
- optisches Aktivieren (S71) des noch nicht ausgehärteten, im Zwischenraum (560) befindlichen Materials.

8. Verfahren zum Herstellen eines Lichtwellenleiters (5) in Form eines optischen Elements nach Anspruch 1, für ein Head-Up-Display, mit
- Aufbringen (S11) eines aushärtbaren flüssigen Materials auf ein Substrat (54) in definierter Schichtdicke (D),
- Erzeugen (S13) von Distanzelementen (561) mittels punktuellem Aushärten des aushärtbaren Materials,
- Laminieren (S15) einer Deckschicht (55) auf das mit Distanzelementen (561) versehene Substrat (54)
- Herstellen (S17) einer optisch aktiven Schicht, in die ein Hologramm einschreibbar ist, im von Substrat (54), Deckschicht (55) und Distanzelementen (561) begrenzten Zwischenraum (560), aufweisend
- optisches Aktivieren (S71) des noch nicht ausgehärteten, im Zwischenraum (560) befindlichen Materials.

9. Verfahren nach einem der Ansprüche 7 bis 8 mit
- Entfernen (S4,S14) des nach dem punktuellen Aushärten verbleibenden nicht ausgehärteten Materials,
- Befüllen (S6,S16) des dadurch freigewordenen Volumens mit einem optisch aktivierbaren Material, und
- Herstellen (S7,S17) der optisch aktiven Schicht aus dem optisch aktivierbaren Material.

## Claims

1. Optical element, comprising a substrate (54), a cover layer (55), an optically active layer (56) located therebetween, in which a hologram is written,
and spacer elements (561) arranged in a manner distributed in the optically active layer (56) and consisting of a cured material, **characterized in that** the spacer elements (561) and the optically active layer (56) consist of the same material.

2. Optical element according to Claim 1, wherein the spacer elements (561) have different thicknesses depending on their position.

3. Optical element according to either of the preceding claims, wherein the spacer elements (561) are arranged in a regular pattern.

4. Optical element according to either of Claims 1 and 2, wherein the spacer elements (561) are arranged in a non-uniformly distributed manner.

5. Optical element according to any of the preceding claims, wherein the spacer elements (561) are located in regions which do not contain any of the holograms (51, 52, 53).

6. Head-up display comprising an optical element according to any of Claims 1 to 5 as an optical waveguide.

7. Method for producing an optical waveguide (5) in the form of an optical element according to Claim 1, for a head-up display, comprising
- positioning (S1) a substrate (54) and a cover layer (55) at a defined distance (D) from one another,
- filling (S2) the thereby defined interspace (560) with a curable liquid material,
- producing (S3) spacer elements (561) by means of curing the curable material at points,
- removing (S5) mounts used for positioning,
- producing (S7) an optically active layer, in which a hologram is writable, in the remaining part of the interspace, comprising
- optically activating (S71) the material that has not yet been cured and is located in the interspace (560).

8. Method for producing an optical waveguide (5) in the form of an optical element according to Claim 1, for a head-up display, comprising
- applying (S11) a curable liquid material to a substrate (54) with a defined layer thickness (D),
- producing (S13) spacer elements (561) by means of curing the curable material at points,
- laminating (S15) a cover layer (55) onto the substrate (54) provided with spacer elements (561),
- producing (S17) an optically active layer, in which a hologram is writable, in the interspace (560) delimited by substrate (54), cover layer (55) and spacer elements (561), comprising
- optically activating (S71) the material that has not yet been cured and is located in the interspace (560).

9. Method according to either of Claims 7 and 8, comprising
- removing (S4, S14) the uncured material remaining after the curing at points,
- filling (S6, S16) the volume thereby freed with an optically activatable material, and
- producing (S7, S17) the optically active layer from the optically activatable material.

## Revendications

1. Élément optique, possédant un substrat (54), une couche de revêtement (55), une couche optiquement active (56) qui se trouve entre ceux-ci et dans laquelle est inscrit un hologramme,
et des éléments d'espacement (561), qui sont disposés répartis dans la couche optiquement active (56) et qui sont constitués d'un matériau durci, **caractérisé en ce que** les éléments d'espacement (561) et la couche optiquement active (56) sont constitués du même matériau.

2. Élément optique selon la revendication 1, les éléments d'espacement (561) présentant une épaisseur différente en fonction de leur position.

3. Élément optique selon l'une des revendications précédentes, les éléments d'espacement (561) étant disposés selon un motif régulier.

4. Élément optique selon l'une des revendications 1 à 2, les éléments d'espacement (561) étant disposés avec une répartition irrégulière.

5. Élément optique selon l'une des revendications précédentes, les éléments d'espacement (561) se trouvant dans des zones qui ne contiennent aucun des hologrammes (51, 52, 53).

6. Afficheur tête haute comprenant un élément optique selon l'une des revendications 1 à 5 en tant que guide d'onde optique.

7. Procédé de fabrication d'un guide d'onde optique (5) sous la forme d'un élément optique selon la revendication 1, pour un afficheur tête haute, comprenant
- positionnement (S1) d'un substrat (54) et d'une couche de revêtement (55) à une distance (D) définie l'un de l'autre,
- remplissage (S2) de l'espace intermédiaire (560) ainsi défini avec un matériau liquide durcissable,
- génération (S3) d'éléments d'espacement (561) au moyen d'un durcissement ponctuel du matériau durcissable,
- retrait (S5) des supports utilisés pour le positionnement,
- fabrication (S7) d'une couche optiquement active, dans laquelle un hologramme peut être inscrit, dans la partie restante de l'espace intermédiaire, comprenant
- activation optique (S71) du matériau non encore durci qui se trouve dans l'espace intermédiaire (560).

8. Procédé de fabrication d'un guide d'onde optique (5) sous la forme d'un élément optique selon la revendication 1, pour un afficheur tête haute, comprenant
- application (S11) d'un matériau liquide durcissable sur un substrat (54) en une épaisseur de couche (D) définie,
- génération (S13) d'éléments d'espacement (561) au moyen d'un durcissement ponctuel du matériau durcissable,
- laminage (S15) d'une couche de revêtement (55) sur le substrat (54) pourvu d'éléments d'espacement (561)
- fabrication (S17) d'une couche optiquement active, dans laquelle un hologramme peut être inscrit, dans l'espace intermédiaire (560) délimité par le substrat (54), la couche de revêtement (55) et les éléments d'espacement (561), comprenant
- activation optique (S71) du matériau non encore durci qui se trouve dans l'espace intermédiaire (560).

9. Procédé selon l'une des revendications 7 à 8, comprenant
- enlèvement (S4, S14) du matériau non durci restant après le durcissement ponctuel,
- remplissage (S6, S16) du volume ainsi libéré avec un matériau optiquement activable, et
- fabrication (S7, S17) de la couche optiquement active à partir du matériau optiquement activable.
